# EUROPEAN PATENT APPLICATION

(11) **EP 1 580 173 A1**
(43) Date of publication of application: **28.09.2005**
(21) Application number: 03769990.7
(22) Date of filing: 29.10.2003
(51) Int. Cl.: C04B 16/06, C04B 28/02, D06M 10/02, D06M 11/07, E04G 21/02

(54) **POLYPROPYLENE FIBER FOR CEMENT REINFORCEMENT, MOLDED CEMENT MADE WITH THE FIBER, METHOD OF CONSTRUCTING CONCRETE STRUCTURE, AND METHOD OF SPRAY CONCRETING**

(30) Priority: 30.10.2002 JP 2002315980; 30.10.2002 JP 2002315987; 30.10.2002 JP 2002316584; 30.10.2002 JP 2002316630
(71) Applicant: Hagihara Industries, Inc., Okayama 712-8502 (JP)
(72) Inventor: YABUKI, Masuo, c/o HAGIHARA INDUSTRIES INC., Kurashiki-shi, Okayama 712-8502 (JP); NAKASHIMA, Kazumasa, c/o HAGIHARA INDUSTRIES INC., Kurashiki-shi, Okayama 712-8502 (JP)
(74) Representative: Kramer - Barske - Schmidtchen
(86) International application number: PCT/JP2003/013883
(87) International publication number: WO 2004/039744

(57) **Abstract**

Polyolefine resin fibers for cement reinforcement which have hydrophilicity impacted thereto and show excellent adhesion to cement matrices. The fibers are ones which have been formed from a polypropylene resin by spinning and have undergone a surface modification treatment selected between oxidation treatment and fluorination treatment so that the fiber surface has an index of wetting of 38 dyn/cm or higher. The polypropylene resin fibers for cement reinforcement, when used in the application or placing of various mortars or concretes, give cement moldings improved in flexural toughness such as flexural strength and impact strength.

## Description

### FIELD OF THE INVENTION

The present invention relates to polypropylene resin fibers for cement reinforcement excellent in adhesive property to cement matrixes and in reinforcing mortars, concrete and the like. In addition, the invention relates to fiber-reinforced molded cement made with the polypropylene resin fibers, a method of constructing concrete structure therewith, and a method of concrete spraying therewith.

### BACKGROUND OF THE INVENTION

Conventionally, cement moldings, external walls of architectures, inner walls of tunnels and hillside slopes etc. are constructed with mortars, concrete and the like. However, these moldings have comparatively large fragility. Therefor, unless the property such as reinforced strength, flexural proof stress, flexural toughness and impact strength thereof is enough, a water leak and an external-wall peeling or dropping accident happen due to cracks of wall surfaces. Therefor, recently, synthetic resin fibers such as steel fibers, polyvinylalcohol resin, polyolefine resin, polyacrylonitrile resin and polyamide resin, are used as reinforcement for the cement moldings. (For example, see Japanese Patent Laid-open Publication No. 303877 of 1988, Japanese Patent Laid-open Publication No. 218220 of 1996, Japanese Patent Laid-open Publication No. 86984 of 1997 and Japanese Patent Publication No. 40786 of 1989.)

However, as for the concrete in which the steel fibers are entrapped, since specific gravity of steel fiber is heavy as 7.8, materials including this are difficult to be carried or entrapped. In addition, as for shotcrete, when the concrete is sprayed, the splashed and dropped steel fibers are sometimes stepped to cause workers to be injured. Moreover, there is another problem as the steel fibers get rusty.

The concrete in which the polyvinylalcohol resin fibers are entrapped has the following problems. The fibers themselves have water absorption and hydrolyze at a high temperature under an alkali condition. Conversely, the concrete without the fibers is remarkably apt to decrease the slump flow, and therefor, a unit amount of water must be increased to maintain enough slump flow for the spraying.

Recently, the cement moldings are often cured with an autoclave to improve dimensional stability or to shorten a curing time. However, this autoclave curing has a problem such as the fibers except polyolefine resin can not be used for reinforcement because they deteriorate from a shortage of heat resistant alkalinity.

On the other hand, the polyolefine resin has few hydrophilic radicals in the molecular structure and few functional groups available to an adhesive property to the cement, and therefor, the adhesion to the cement matrixes is extremely inferior. Accordingly, when the cement moldings reinforced with the polyolefine resin fibers are broken, the fibers are easily drawn out. Therefor, even if impact strength and breaking energy due to drawing resistance of the fibers increase, flexural strength has not been improved greatly yet.

To improve hydrophilicity between the cement and the polyolefine resin fibers, a method in which hydrophilic high polymers such as various kinds of inorganic fine grains and polyvinyl acetate resin are added to the fibers is proposed. However, in this case, since foreign matters are entrapped all over the resin fibers, a drawing property is missed and enough fiber strength is not given. In addition, nothing contributes to improving an affinity except modifier on the surfaces of the resin fibers, and enough reforming effects can not be given compared with the added amount.

The polyolefine resin fibers comprising short fibers such as split yarn, single yarn or focusing yarn whose fineness is less than 100dt and whose fiber-length is less than 5mm produce fiber masses called fiber balls from their shapes. In addition, it is difficult to equally disperse the fibers in the cement because they are bulky. In enlarging fineness of the fibers to improve dispersibility, adhesion to the cement is inferior, and the fibers are drawn out when flexural stress is charged. Therefor, enough reinforcing effects can not be given.

On the contrary, a method in which surfactants comprising polyoxyalkylenealkylphenyl ether phosphate, polyoxyalkylene-fatty acid ester, and the like are applied on polypropylene resin fibers that are cut into thick filaments is proposed (see Japanese Patent Laid-open Publication No. 116297 of 1999). Here, the filaments have irregularities having a specific average compression on fiber sections, and therein, the single yarn fineness is more than 200dt and the length is more than 5mm. However, since the surfactants have no adhesion to the polyolefine resin fibers, even if the polyolefine resin fibers adheres to the cement matrixes, enough adhesive strength can not be given therebetween. Accordingly, the cement moldings can not improve in flexural toughness.

The present invention aims to solve the above-mentioned problems. That is, it aims to provide polypropylene resin fibers for cement reinforcement which give hydrophilicity imparted to the polyolefine resin fibers, show good dispersibility and physical coupling to the cement as well as excellent adhesion to cement matrixes, and give cement moldings improved in flexural toughness, flexural strength and impact strength, fiber-reinforced molded cement made therewith, method of constructing concrete structure therewith, and method of concrete spraying therewith.

### SUMMARY OF THE INVENTION

The present invention basically provides fibers for cement reinforcement increased in an index of wetting on their surface and improved in hydrophilicity. The fibers comprise specified polyolefine resin, having undergone a specified surface modification treatment on surfaces thereof. That is, the fibers are spun from polypropylene resin, and their surfaces have undergone the surface modification treatment selected between oxidation treatment and fluorination treatment so that a, fiber surface has an index of wetting of 38dyn/cm or higher. Here, the index of wetting is Japanese industrial standard, which indicates ability for holding an adhesion between the fiber surface and the concrete. By this, an excellent hydrophilicity is given to boundary surfaces between polypropylene fibers and the cement, and cement moldings are manufactured so as to be excellent in adhesion to the cement matrixes, flexural strength and impact strength.

In this case, since the fibers are formed into monofilament having the single yarn fineness of 200dt or more with irregularities on their spun fiber surfaces, a problem that contact area with the cement is decreased in general thick fibers can be made up for to improve physical coupling to the cement. Therefor, the cement moldings excellent in flexural toughness can be manufactured.

Besides, the present invention provides polypropylene resin fibers for cement reinforcement in which corona discharge treatment is selected for oxidation treatment on their fiber surfaces. After this treatment, the fibers have an index of wetting within the range of 40-90dyn/cm.

Moreover, the present invention provides polypropylene resin fibers for cement reinforcement in which fluorinating treatment is performed on their fiber surfaces at fluorine gas concentration within the range of 5-40% by volume. After this treatment, the fibers have an index of wetting within the range of 50-90dyn/cm.

Furthermore, the present invention provides cement moldings for fiber reinforcement manufactured from cement compositions added an adequate amount of the above-mentioned polypropylene resin fibers in mortal mixtures including cement, fine aggregates and water.

Besides, the present invention provides a method of constructing concrete structure for manufacturing by mixing a fixed amount of the above-mentioned polypropylene resin fibers to concrete mixtures including cement, fine aggregates, coarse aggregates and water.

Moreover, the present invention provides a method of concrete spraying for spraying a mixture mixed an adequate amount of the above-mentioned polypropylene resin fibers to concrete mixtures including cement, fine aggregates, coarse aggregates and water on an executed surface in a fixed thickness dimension.

### PREFERRED EMBODIMENT OF THE INVENTION

In the present invention, polypropylene resin used as fiber materials is selected among propylene homopolymer, polypropylene copolymer such as ethylene-propylene block copolymer or random copolymer, and mixtures thereof. In these, the propylene homopolymer is preferable for one for cement reinforcement, which requires high strength and heat resistance. Especially, it is desirable to select one having an isotactic pentad fraction of 0.9 or more. Here, the isotactic pentad fraction, which is published in Macromolecules 6 925 (1973) by A. Zambelli et al, means isotactic fraction per pentad unit in a polypropylene molecule measured by using ¹³C- NMR.

Melt flow rate (which is outlined in MFR) of the polypropylene resin is selected from within the range of 0.1-50g/10minutes in view of continuous stable productivity, more preferably, it is selected from within the range of 1-10g/10minutes.

Different polyolefine resin can be added to the polypropylene resin during the spinning process, if necessary. Here, as the different polyolefine resin, are listed poly (1-butene), polyethylene resin such as high density polyethylene, liner low density polyethylene, low density polyethylene, ethylene-vinyl-acetate copolymer, ethylenealkyl-acrylate copolymer, and the like.

Antioxidant, lubricant, ultraviolet absorbent, anti-static agent, inorganic filler, organic filler, cross linking agent, foaming agent, nucleus agent, and the like may be mixed to the above-mentioned polypropylene composition in accordance with using objects without deviating the present invention.

In the present invention, the polypropylene resin fiber to be spun is short one cut from monofilament having a random thickness. A manufacturing method for this is not defined specifically, for example, a manufacturing technology that extrudes filament from a round, elliptic, modified or string-shaped die is adopted.

Concretely, a publicly known melt spinning method is adopted, and spinning is carried out with a string-shaped die drawable in high magnification. In this case, polypropylene is melted and extruded from the string-shaped die, and then, a drawing treatment is performed as keeping the extruded string-shaped tape to form the fibers.

Although the string-shaped die has at least two nozzles connected in series, usually 5-20 nozzles are connected, and preferably 10-15 nozzles are connected.

The monofilament in the present invention may be short fibers cut from comparatively thick monofilament. In this case, in addition to the above-mentioned single layer filament, complex monofilament comprising a core layer of polypropylene component having a high melting point and a sheath layer of polypropylene component having a low melting point can be used. In this manufacturing method, polypropylene forming each layer is melted and mixed with an extruder. Here, two discharge holes are concentrically provided on the die. The core layer comprising high melting point component is fed from the center side discharge hole of the die, and the sheath layer comprising low melting point component is extruded to the outside thereof so as to cover the core layer to form the complex monofilament.

In this case, since essential strength depends on the materiality of the core layer, it is preferable to use propylene homopolymer, isotactic polypropylene, and the like as a high melting point component. On the other hand, as a low melting point component, it is preferable to use propylene-ethylene block copolymer, random copolymer and syndiotactic polypropylene, and the like. Such complex monofilament can prevent polypropylene resin fibers from heat deteriorating in a thermal cure at the time of concrete molding.

Next, the monofilament has undergone thermal drawing and thermal relaxing treatment. According to this, the rigidity of the filament is increased. Therefore, polypropylene monofilament suitable for cement reinforcement having a small elongation can be given. The thermal drawing is performed at a temperature over a softening point of polypropylene, and besides under a melting point thereof. Usually, the drawing temperature is within the range of 90-150°C, the drawing magnification is within the range of 5-12 times, preferably within the range of 7-9 times. As a thermal drawing method, is adopted a hot roll system, a hot plate system, an infrared irradiation system, a hot air oven system, a hot water system, and the like.

Tensile strength of the drawn polypropylene filament is 5g/dt or more, preferably 6g/dt or more. Tensile elongation thereof is 20% or less, preferably 15% or less. It is undesirable that the tensile strength and the tensile elongation are not respectively within these ranges because the strength of the polypropylene resin fibers for cement reinforcement becomes insufficient.

The single yarn fineness of the polypropylene monofilament is within the range of 5-10,000 decitex (dt), preferably within the range of 10dt to 6,500dt. In this case, for example, comparatively thin one having the single yarn fineness within the range of 5-100dt is cut in short fibers having the fiber length within the range of 3-30mm, preferably within the range of 5-15mm. The comparatively thick one having the single yarn fineness within the range of 200-10,000dt is cut in the fiber length within the range of 5-100mm, preferably within the range of 20-70mm. The fibers having the length under 3mm come off the cement. And the fibers having the length over 100mm are inferior in the dispersibility.

Since the fibers having the single yarn fineness under 5dt are too thin, they easily become fiber balls because of the uniform dispersibility in the concrete mixture, thereby causing problems in execution or reinforcement. On the other hand, in case of the single yarn fineness over 200dt, since the touch area between the fibers and the concrete mixture is reduced, the fibers come to be easily drawn against the flexural stress and the reinforcement effects are decreased. Therefor, in the present invention, for comparatively thick ones having the single yarn fitness of 200dt or more, it is necessary to form irregularities on their surfaces as a next process of the spinning and the thermal drawing. By this, the touch area between the fibers and the concrete is increased, the fibers drawing following the concrete stiffening is regulated, and the reinforcement effects can be improved. As a method for forming irregularities on their surfaces, for example, a method for embossing monofilament is listed. The embossing is performed by passing the monofilament through an embossing roller before drawing or after drawing, and irregularities are continuously formed on a longitudinal direction of the monofilament.

Although the shape of emboss, such as the length or the depth, may be optional, it is necessary that an average compression of the fiber cross-section by crushing is within the range of 1.5/1-7/1. Here, the average compression means an average ratio of the width and the height in a cross-section of fiber having various shapes. When the average compression is under 1.5/1, there are a few irregularities on the fiber surfaces. Accordingly, there are no differences between the plane surface fibers and the reinforcing effects. On the other hand, when the average compression is over 7/1, the strength by shaping is remarkably inferior. Accordingly, the dispersibility in the concrete is apt to grow worse.

In the present invention, the above-mentioned polypropylene resin fibers have undergone a surface modification treatment selected between oxidation treatment and fluorination treatment so that the fiber surface has an index of wetting of 38dyn/cm or more. One having the index of wetting under 38dyn/cm is undesirable because enough treatment can not be given to the polyolefine resin fibers and because flexural strength and impact strength of the cement moldings can not be improved.

The oxidation treatment is selected as at least a kind of treatment method among corona discharge treatment, plasma treatment, flame-plasma treatment, electron beam irradiation treatment and ultraviolet irradiation treatment. Preferably, corona discharge treatment or plasma treatment is selected.

The corona discharge treatment is performed under a general condition, for example, the distance between the tip of electrode and the treated foundation within the range of 0.2-5.0mm. The processing amount is 5w · minute or more per 1m² polypropylene fiber, preferably within the range of 5-200w · minute/m² , and more preferably within the range of 10-to 180w · minute/m². When the amount is under 5w · minute/m², the effect of the corona discharge treatment is so insufficient that the index of wetting of the fiber surface can not be set up within the above-mentioned range, and that flexural strength and impact strength of the cement moldings can not be improved.

The plasma treatment process comprises spraying an electrically neutralized excited gas on the surface of plastic base material. The excited gas is formed by eliminating charged particles from simple substance gas such as argon, helium, krypton, neon, xenon, hydrogen, nitrogen, oxygen, ozone, carbon monoxide, carbon dioxide and sulfur dioxide or mixed gas thereof after being electrically excited by plasma jet. The plasma jet is formed by applying voltage between counter electrodes under an about atmospheric pressure and then generating plasma discharge from the mixed gas comprising, for example, nitrogen and oxygen including oxygen concentration within the range of 5-15% by volume. In this case, the distance between the electrodes that the plastic base material passes is suitably determined by the thickness thereof, the magnitude of the applying voltage, the flow rate of the mixed gas, and the like. For example, the distance is usually within the range of 1-50mm, preferably within the range of 2-30mm. It is preferable that the voltage between the electrodes is applied so that field strength is within the range of 1-40kv/cm. Here, the frequency of AC power is within the range of 1-100kHz.

The flame plasma treatment process comprises spraying ionization plasma on the surface of the plastic base material. Here, the ionization plasma is generated in flames when natural gas or propane burns.

The electron beam irradiation treatment comprises irradiating electron beams on the surface of the plastic base material. Here, the irradiating electron beams are generated by an electron beam accelerate. As an electron beam radiator, for example, is used a device "ELECTRO CURTAIN" (name of goods) that irradiates uniform electron beams from liner filaments in the shape of a curtain.

The ultraviolet irradiation treatment process comprises irradiating ultraviolet having wavelength within the range of 200-400m *µ* on the surface of the plastic base material.

In the fluorination treatment, for example, fluorine gas is contacted to the polypropylene fiber surfaces under existence of oxygen to form a surface-oxidizing zone thereon. According to this, the index of wetting of the surface thereof is improved in the above-mentioned range. For example, it is performed within the range of fluorine gas concentration within the range of 5-40% by volume under existence of oxygen concentration within the range of 60-95% by volume. It is preferable that the pressure is comparatively low to easily perform the reaction operation and the regulation. Specially, it is preferable that the pressure is 50 Pa or less. A type of the fluorination treatment can be selected from either a batch type or a continuous type. Treatment temperature is usually within the range of 10-100°C, preferably within the range of 10-40°C. The treatment time differs in the concentration of the fluorine gas, the pressure thereof, the treatment temperature, and the like, being usually within the range of 10 seconds to 2 hours, preferably 30-60 seconds.

In case of the fluorination treatment by a batch process, the polypropylene resin fibers are put into a reaction container in advance, thereafter being vacuously deaerated. In addition, oxygen gas within the range of 60-95% by volume is fed therein, and then, fluorine gas within the range of 5-40% by volume is fed therein. It is desirable that the fluorination treatment is performed at the treatment temperature of 10-100°C. After the fluorination treatment, unreacting gas is eliminated from the container, and the inside thereof is efficiently substituted and ventilated by inactive gas to produce fluorination-treated polypropylene fibers.

Polypropylene fibers for reinforcement cement of the present invention can be used in various embodiments with mixed in mortars or concretes.

For example, are listed a method for manufacturing cement moldings by forming therewith, a method for constructing concrete structure or mortar structure by placing and painting therewith, a method for constructing concrete structure or mortar structure by spraying therewith, and the like.

When the polypropylene fibers are mixed in mortars, they are used with mixed in cement, fine aggregates, water and a proper amount of admixture.

Besides, when they are mixed in concrete, they are used with mixed in cement, fine aggregates, coarse aggregates, water and a proper amount of admixture. Here, as, the cement, are listed hydraulic cement such as Portland cement, blast furnace cement, silica cement, fly ash cement, white Portland cement, alumina cement, and the like, and non-hydraulic cement such as gypsum and lime. As the fine aggregates, are listed river sand, sea sand, pit sand, silica sand, glass sand, iron sand, ash sand, another artificial sand, and the like. As the coarse aggregates, are listed gravel, ballast, crushed stone, slag, various artificial lightweight aggregates, and the like.

In manufacturing the cement moldings, as a method for mixing polypropylene fibers in cement, can be used publicly known methods such as a method for dispersing them in cement powder, a premix method for dispersing them in cement slurry and a spray-up method for spraying cement, polypropylene fibers and water at the same time, and the like.

The composite amount of the polypropylene fibers is 0.1-10% by weight to the cement, preferably within the range of 0.5-5% by weight. The composite amount of 0.1% by weight or less is undesirable because reinforcement effects are inferior. The composite of 10% by weight or more is undesirable because flexural strength is inferior and uniform dispersion is difficult.

Thus given cement slurry is molded by a publicly known method such as a watermark molding method, an extrusion molding method, an injection molding method according to purposes. Such a molding is cured by a natural curing method for being left in atmosphere or in water at an ordinary temperature for about 10 days or by an autoclave method for being disposed at a temperature of 100-200°C after being left at the ordinary temperature for a few days to produce a cement molding.

The purposes of the cement moldings in the present invention cover all sorts of cement products. For example, they are used in wall materials, floor material concretes, finishing mortars, waterproofed concretes, slate roof materials as buildings, or pavement materials such as roads and airstrips, road materials such as road-signs and gutters, pipes such as sewer pipes and cable ducts, fish banks, bulkhead blocks, tetrapots, and various organizations such as sleepers, benches and flower pots.

In using the polypropylene fibers to execute mortar structures, they are mixed with cement, fine aggregates, water and a proper amount of admixture at the same time or in the state that the mortars are tempered up, and placed and painted. Besides, in executing concrete structures, the polypropylene fibers are mixed with cement, fine aggregates, water and a proper amount of admixture at the same time or in the state that the concretes are tempered up, and placed and painted.

In the present invention, it is important to mix and disperse the polypropylene fibers of 4-19kg, preferably 6-14kg to 1m³ concrete mixtures comprising cement, fine aggregates, rough aggregates, water and the like. When the mixed amount of the polypropylene fibers is over 19kg, flexural toughness does not increase because the fibers do not uniformly disperse in the concrete. On the other hand, in the mixed amount of less than 4 kg, bounces at spraying are large and reinforcement effects after curing are small.

In mixing method of this case, it is preferable that the concrete mixtures comprising cement, fine aggregates, rough aggregates, water and the like are input to form base concrete and the polypropylene fibers are input and mixed therein after mixing the base concrete. Although mixing time depends on a mixed amount per a time, it is proper that the mixing time is for 45-90 seconds in the base concrete and for 45-90 seconds after inputting the polypropylene fibers.

In addition, in a method of spray concreting, it is preferable that slump is adjusted within the range of 8-21cm in using the polypropylene fibers in the above-mentioned composite amount. The slump under 8cm is undesirable because spraying work is difficult, and the slump over 21cm is undesirable because the bounces become large. When the slump is within the above-mentioned range, it is effective in a spray nozzle to be perpendicular to the sprayed surface and to make the distance therebetween within the range of 0.5-1.5m.

Thus produced concrete mixture is used to cover tunnels (including batter piles and shafts) and large cavity structures, to prevent slop surfaces, slant surfaces or wall surfaces from weathering, peeling and flaking, and to mend and reinforce tunnels and bridges as a shotcrete. ,

The following examples will explain about efficiency of the polypropylene fibers in the invention.

### Example 1:

Polypropylene resin (MFR = 1.0g/10 minutes) was fed into an extruder, extruded from string-shaped nozzles having 2mm φ × 10 bores at 230°C resin temperature, and drawn by a hot plate contact type drawing method. A drawing temperature was 130°C , an annealing temperature was 135°C, and a drawing magnification was 12 times. The given drawn yarn had the single yarn fineness of 50dt.

The drawn yarn surface had undergone a corona discharge treatment as a surface oxidation treatment under 20 w·minute per 1m². The given polypropylene resin drawn yarn surface had an index of wetting of 42 dyn/cm.

The polypropylene resin drawn yarn was cut in 10mm length to form short fibers.

Molding for cement moldings was based on JISR5201. That is, 100 wt. parts Portland cements and 200 wt. parts standard sands were mixed sufficiently, and therein, the fibers of 5 wt. parts and water of 65 wt. parts are added. Then they were mixed uniformly on the whole. Thereafter, they were poured into a mould of 40mm × 40mm × 160mm, left in the atmosphere for 48 hours at the ordinal temperature, thereafter cured in the autoclave for 20 hours at 165°C.

The given molding had a flexural strength of 26.0 MPa and Charpy impact strength of 9.5KJ/m². The dispersibility was good.

### (Test Method)

(1) MFR : Based on JISK6922-1
(2) Flexural strength : Based on JISA1408
(3) Charpy impact strength : Based on JISB7722
(4) Dispersibility Appreciation: The surface of cement slurry comprising polypropylene fibers and cement was appreciated by visual observation.

### Example 2:

The same treatments as Example 1 except the conditions that the polypropylene resin drawn yarn surface had undergone the corona discharge treatment on at the rate of 30w · minute per 1m² and the index of wetting the surface was 45 dyn/cm were performed.

The given moldings had the flexural strength of 26.5 MPa, Charpy impact strength of 9.8 KJ/m². The dispersibility was good.

### Example 3:

A drawn yarn was produced similarly with Example 1 and cut in 10mm length to form short fibers. The short fibers were put into a reaction container, and thereafter, the container was made in vacuum. Gaseous oxygen of 80% by volume and gaseous fluorine of 20% by volume were injected in order, and these were reacted at 20°C under 10 Pa pressure. The given fibers had the surfaces having the index of wetting of 60 dyn/cm.

Cement moldings were molded similarly with Example 1 by using these short fibers. The given moldings had the flexural strength of 28.0 MPa and Charpy impact strength of 10.5 KJ/m². The dispersibility was good.

### Comparative example 1:

As a finishing agent, was produced finishing agent liquid mixed 50% by weight polyoxyethylene nonyl phenyl ether phosphate (HLB = 8.0) and 50% by weight polyoxyethylene oleic acid ester (HLB = 9.0). The fibers were dipped therein, and thereafter dried to be applied the finishing agent of 1% by weight. The treatments except these were same as Example 1.

The given moldings had the flexural strength of 19.0 MPa and Charpy impact strength of 6.5 KJ/m². The dispersibility of the fibers was good.

### Comparative example 2:

As the finishing agent, was produced finishing agent liquid mixed 70% by weight polyoxyethylene nonyl phenyl ether phosphate (HLB = 8.0) and 30% by weight polyoxyethylene oleic acid ester (HLB = 9.0). The fibers were dipped therein, and thereafter dried to be applied the finishing agent of 1% by weight. The treatments except these were same as Example 1.

The given moldings had the flexural strength of 16.5 MPa and Charpy impact strength of 3.5 KJ/m². The dispersibility of the fibers was no good.

### Comparative example 3:

As the finishing agent, was produced finishing agent liquid mixed 30% by weight polyoxyethylene nonyl phenyl ether phosphate (HLB = 8.0) and 70% by weight polyoxyethylene oleic acid ester (HLB = 9.0). The fibers were dipped therein, and thereafter dried to be applied the finishing agent of 1% by weight.

The given moldings had the flexural strength of 17.5 MPa and Charpy impact strength of 2.8 KJ/m². The dispersibility of the fibers was approximately no good.

### Example 4:

### (1) Producing fibers

Polypropylene resin (MFR = 4.0 g/10 minutes, Tm = 163°C) was input into an extruder, spun from circular nozzles and cooled. Thereafter, it was drawn at 115°C hot drawing temperature, 120°C hot relaxation temperature and 7-8 times drawing magnifications in accordance with a hot air oven type drawing method to produce a several kinds of monofilament having different fineness. Then, the monofilament is formed into polypropylene monofilament having irregularities on the surface different in an average compression by using a slanted grid emboss roll and hard rubber roll and by changing emboss nip pressure.

As the surface oxidation treatment, a corona discharge treatment was performed on the polypropylene monofilament surface at 30w·minute per 1m². The given monofilament had the surface of the index of wetting of 45 dyn/cm. The polypropylene monofilament was cut in 30mm length to be formed polypropylene fibers.

### (2) Appreciation Test

The given polypropylene resin fibers were tested about a reinforcement effect of concrete by the following methods. The results are shown in table 1.

### ① Materials and Compounding ratio

Cement: 430 kg/m³ high early strength Portland cement (specific density = 3.12)
Fine aggregate: 1123 kg/m³ pit sand made in Kisarazu (specific gravity in saturated surface-dry condition = 2.60)
Rough aggregate: 491 kg/m³ crushed stone made in Oumi 1505 (specific gravity in saturated surface-dry condition = 2.65)
Water: 215 kg/m³ service water
Fiber: 1% as volume

### ② A method for mixing concrete

Using a forced pan mixer having mixing volume of 100 1, 1 batch was conducted at 601. A temperature at the time when the concrete was tempered was approximately 20°C. The mixing method was conducted by inputting fine aggregate, cement, water and rough aggregate, mixing them for 45 seconds, thereafter adding reinforcement fibers as rotating the mixer, mixing these for 60 seconds, and discharging.

### ③ Producing test pieces

This was based on Civil Engineering Standard "Strength Of Steel Fiber Reinforcement Concrete And How To Make Test Pieces For Compressed Toughness" (JSCE F552-1983). The test pieces were taken off from the mold after 24 hours, and a water curing was conducted till material ages of 7 days.

### ④ A method for testing

This was based on Civil Engineering Standard "Compressed Strength Of Steel Fiber Reinforcement Concrete And How To Make Test Pieces For Compressed Toughness" (JSCE F551-1983) and Civil Engineering Standard "Flexural Strength Of Steel Fiber Reinforcement Concrete And How To Make Test Pieces For Compressed Toughness" (JSCE F552-1983).

### Example 5 and Example 6:

They were conducted similarly with Example 4 except changing the fineness and the compression of polypropylene resin fiber. The results are shown in table 1.

### Example 7:

Polypropylene monofilament was produced similarly with Example 4, and cut in short fibers having 30mm length.

After the short fibers were put into a reaction container, the conductor was in vacuum. Gaseous oxygen of 80% by volume and gaseous fluorine of 20% by volume were led into the container in order, and a reaction was performed at 20°C under the pressure of 10 Pa. The given polypropylene short fibers had the surfaces having the index of wetting of 60 dyn/cm.

The polypropylene short fibers were tested about a concrete reinforcement effect similarly with Example 4. The result is shown in table 1.

### Example 8 and Example 9:

They were conducted similarly with Example 7 except changing the fineness and the compression of polypropylene resin fiber. The results are shown in table 1.

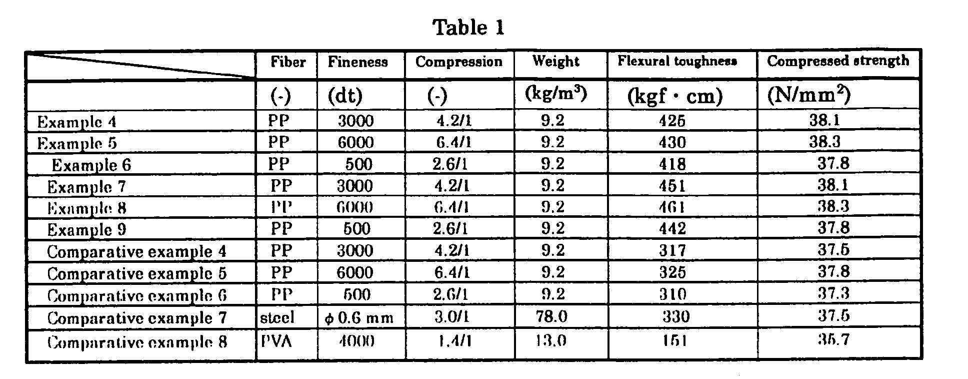

## Claims

1. Polypropylene fiber for cement reinforcement, comprising:
fibers spun out of polypropylene resin, said fibers having undergone a surface modification treatment selected between oxidation treatment and fluorination treatment so that a fiber surface has an index of wetting of 38 dyn/cm or more.

2. Polypropylene fibers for cement reinforcement, comprising:
monofilament spun out of polypropylene resin, said monofilament having single yarn fineness of 200 dt or more with irregularities on their surfaces, and having undergone a surface modification treatment selected between oxidation treatment and fluorination treatment so that a monofilament surface has an index of wetting of 38 dyn/cm or more.

3. Polypropylene fibers for cement reinforcement of claim 1 or claim 2,
wherein the oxidation treatment is selected between corona discharge treatment and plasma treatment so that a fiber surface has an index of wetting within the range of 40 to 90 dyn/cm after the treatment.

4. Polypropylene fibers for cement reinforcement of claim 1 or claim 2,
wherein the fluorination treatment is conducted under fluorine gas in a concentration within the range of 5 to 40 % by volume so that a fiber surface has an index of wetting within the range of 50 to 90 dyn/cm after the treatment.

5. Molded cement, comprising:
cement composition having an adequate amount of polypropylene fiber of claim 1 added to mortar mixture including cement, fine aggregate and water.

6. Method of constructing concrete structure which comprises mixing a fixed amount of polypropylene fiber of claim 2 to concrete mixture including cement, fine aggregate, rough aggregate and water.

7. Method of spray concreting which comprises mixing an adequate amount of polypropylene fiber of claim 2 to concrete mixture including cement, fine aggregate, rough aggregate and water, spraying the mixture on a formation surface in a fixed thickness.
